# EUROPEAN PATENT SPECIFICATION

(11) **EP 2 098 409 B1**
(45) Date of publication and mention of the grant of the patent: **23.11.2011**
(21) Application number: 08102379.8
(22) Date of filing: 07.03.2008
(51) Int. Cl.: B60P 1/02

(54) **Load carrier arrangement**
Lastträgeranordnung
Agencement de support de charge

(43) Date of publication of application: 09.09.2009
(73) Proprietor: JDS Sandströms Patent AB, 163 08 Spånga (SE)
(72) Inventor: Sandström, Dan, 975 91 Lulea (SE)
(74) Representative: Karlström, Lennart

(56) References cited:
- WO-A-01/32466
- DE-U1-202007 006 677
- GB-A- 1 218 054
- GB-A- 2 395 694
- US-A- 5 269 576

## Description

The present invention relates to a load carrier arrangement, and then particularly to a roller mechanism for raisable and lowerable load carriers in a loading compartment. Such arrangements are used primarily in the loading compartments of trucks, where the carriers support loads and can be raised and lowered to enable goods to be supported at several levels in the loading compartment. The load carrier according to the invention is especially arranged to be able to be handled by means of fork trucks or similar motor drive mechanical handling means.

It is known to include in such arrangements vertical rails at both longitudinal edges of the loading compartment to enable the load carriers to be raised and lowered, said rails being disposed in pairs with each rail centrally opposite the other. These load carriers include at least one transverse load beam which carries at each end a slide or roller mechanism that co-acts with a corresponding vertical rail so as to enable the load carrier as a whole, to be moved up and down the vertical rail, with part of the slide mechanism or the rollers of the roller mechanism being movable within the vertical rail. Disposed at distances along the vertical carrier rail are preferably openings in which a locking pin projecting out from the slide or roller mechanism can engage and therewith lock the slide or roller mechanism and thereby the load carrier in a desired vertical position along the vertical carrier rail. The load carrier can comprise co-acting transverse load beams, or a floor mounted on the top of two co-acting load beams.

A load carrier arrangement of the above type is previously known from, amongst others, the inventor's previous European patent applications EP-0 953 478 or EP-1 226 048.

The preamble of claim 1 is shown in document WO 01/32466 A1.

A problem encountered with the above type of load carriers is that when the load carriers are raised or lowered, usually by the means of a fork truck, the force applied on the load carrier is not equally balanced. Due to the substantial transverse length of the load carrier, usually about 2.5 m, there is a risk that one end of the load carrier is moved faster that the other, resulting in a skewing of the load carrier and consequently also of the slide or roller mechanisms connected to the ends of the load carrier. Thereby the possibility to move the slide or roller mechanisms upwards or downwards in the vertical rails can be affected so far that the slide or roller mechanisms get jammed in the vertical rails, thereby preventing further movement of the load carrier. Even if the connection between slide or roller mechanism and load carrier, as mentioned in EP-A-1 226 048, is somewhat pivotable, it can not totally avoid jamming of the slide or roller mechanism, as the distance between the opposing vertical rails in which the slide or roller mechanisms run may vary due to bending of the rails or simply due to the skewing of the load carrier.

It is therefore an object of the present invention to provide a novel load carrier arrangement by means of which the above problem with the jamming of the slide or roller mechanism can be avoided.

This object of the invention is obtained by means of a load carrier arrangement as described in claim 1.

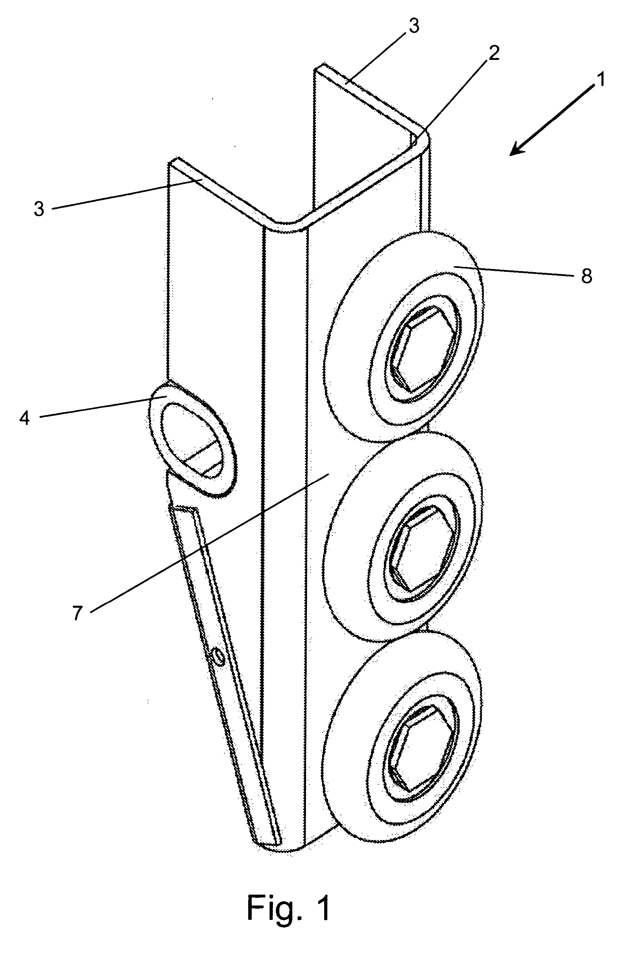

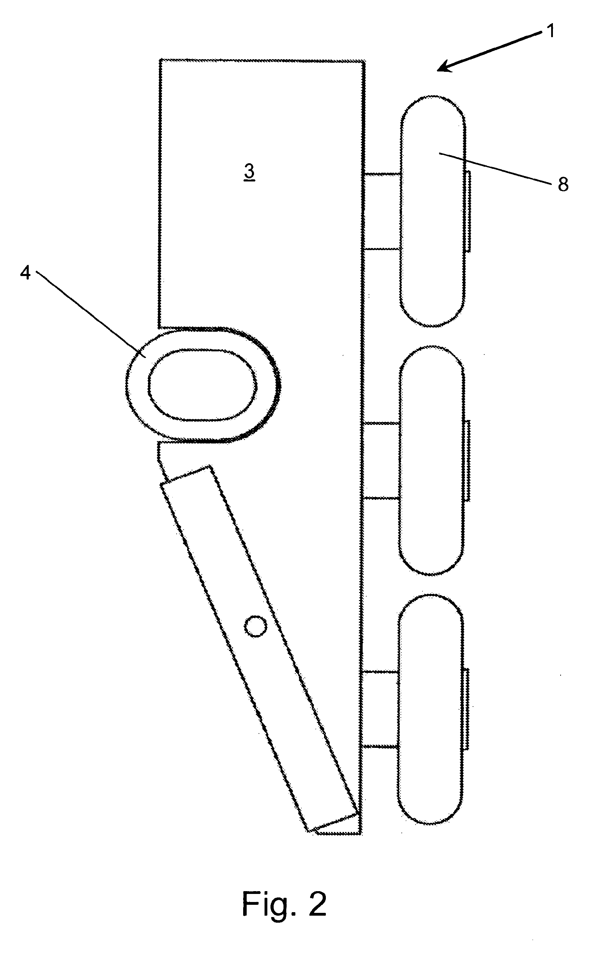

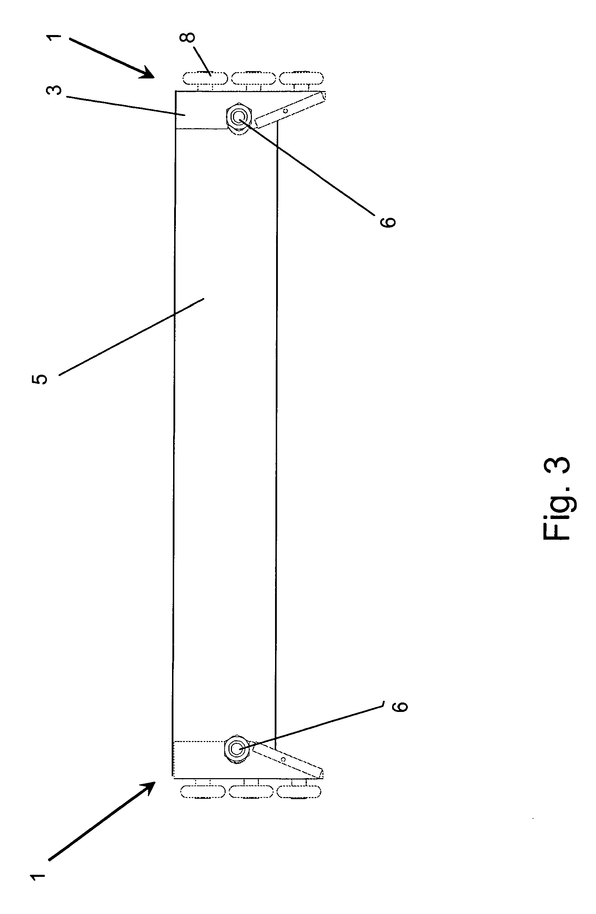

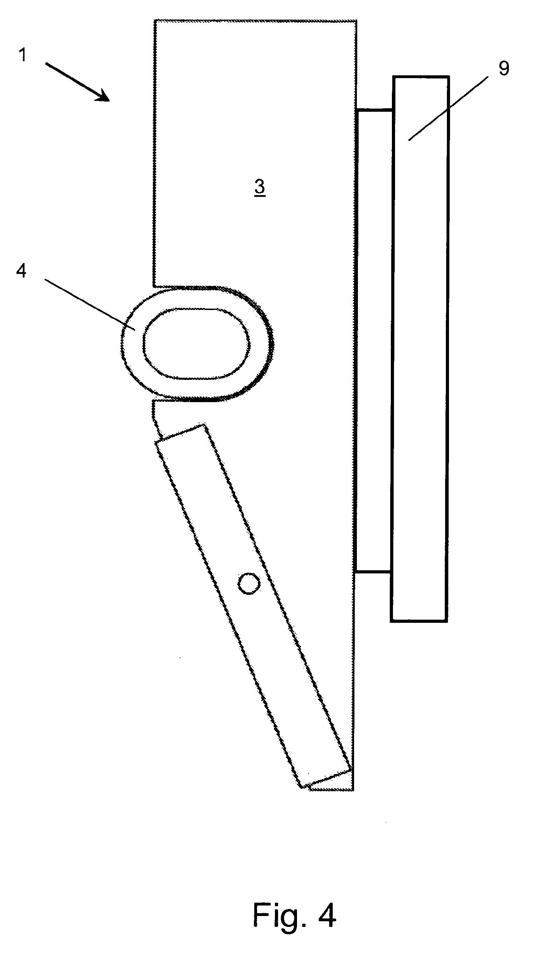

The invention will now be described in more detail with reference to the enclosed drawings showing a preferred but not limiting embodiment of a roller mechanism for the load carrier according to the invention. In the drawings **Fig. 1** shows a perspective view of a preferred embodiment of the roller mechanism, **Fig. 2** shows a side view of the roller mechanism shown in Fig. 1, **Fig. 3** shows a schematic front view of a load carrier with the preferred embodiment of roller mechanisms mounted at each end of the load carrier, not in scale, and **Fig. 4** shows a view similar to that of Fig. 2 but showing a slide mechanism instead of a roller mechanism.

In Fig. 1 is shown a preferred embodiment of a roller mechanism 1 as being a part of a load carrier arrangement according to the invention. The roller mechanism 1 comprises a main body 2, mainly made up of a piece of sheet steel bent to a U-profile. In the edges of the side walls 3, or opposing legs, of the U-profiled roller mechanism body 2 a recess is formed, into which a tube 4 is inserted, connecting the two opposing legs 3. The tube 4 is also of steel, and can be connected and secured in the recesses in the side walls 3 by means of welding.

The roller mechanism 1 is connected to both ends of a load carrier 5, see Fig. 3. According to the preferred embodiment of the roller mechanism 1 shown in Fig. 1 the load carrier 5 and the roller mechanisms 1 are connected by means of a bolt and nut arrangement 6, of which the bolt passes through the tube 4 in the roller mechanism 1. The nut in the bolt and nut arrangement 6 is preferably a locking nut, so that connection between roller mechanism 1 and load carrier 5 can be secured without the necessity of tightening the parts immovably to each other. The load carrier 5 can quite simply be provided with a transverse hole through the carrier to let the bolt of the bolt and nut arrangement 6 pass there through.

As shown in the drawings the roller mechanism 1 on its main body wall 7, connecting the two side walls 3, is provided with a number of guide wheels 8, arranged in a vertical row. By means of these guide wheels 8 the roller mechanism 1 is guided upwards and downwards along a guide rail (not shown) in the side walls of the loading compartment. The guide wheels 8 are located within the guide rail, with the shafts of the guide wheels extending through a vertical slot or opening in the guide rail, and consequently with the main body 2 of the roller mechanism located outside the guide rail. Each roller mechanism 1 should have at least two guide wheels 8 to obtaining a proper guiding in the guide rail, and as shown in the preferred embodiment in the drawings the preferred number of guide wheels 8 is three.

As shown in Figs. 1 and 2 the tube 4 inserted into the side walls 3 of the roller mechanism, and through which the connecting bolt of the bolt and nut arrangement 6 extends, is flattened so that it has an oval form and is longer in the direction crosswise to the longitudinal direction of the roller mechanism 1. As the tube 4 has this oval form, it is possible for the bolt to move a short distance in the crosswise direction of the roller mechanism, and thereby it is possible for the roller mechanism to move to and from the end of the load carrier to which it is connected, and in this way adapt any distance variations depending to any skewing of the load carrier, or due to that the guide rails at the opposing sides of load carrier or loading compartment are not exactly parallel. The internal height of the oval tube essentially corresponds to the diameter of the bolt used, so that there is no substantial play in the vertical direction.

The location of the tube 4, and of the bolt and nut arrangement 6, in the roller mechanism 1 is preferably above both the geometrical centre and the centre of gravity of the roller mechanism 1. By this location of the tube and bolt and nut arrangement the risk for jamming in the guide rail is reduced. The location of the tube 4 and bolt and nut arrangement 6 in horizontal direction rather close to the guide wheels 8 is advantageous as it creates only a very small lever for any forces applied from the load carried by the load carrier.

The load carrier can as stated earlier comprise co-acting transverse load beams or a floor mounted on top of two coating load beams. In such cases it is the simplest to connect the roller mechanism 1 to the ends of the load beams. However, the load carrier may also be mad as a self-containing floor structure, and in such cases it would be necessary to have some form of connection points on the floor structure, for the connection to the roller mechanisms.

It has also here above been described that the oval tube 4 is inserted into the side walls 3 of the roller mechanism, for connection by means of the bolt and nut arrangement 6 to the load carrier. It is though also possible to have the oval tube inserted or connected to the load carrier 5, for connection to a roller mechanism thus pivotally connected to the load carrier by means of a bolt and nut arrangement passing through holes in the side walls 3 of the roller mechanism 1 as well as through the oval tube. However, such a solution would probably require additional strength measures for the roller mechanism.

Instead of a roller mechanism 1, having guide wheels 8 running in a co-acting vertical rail, the mechanism can be a slide mechanism of essentially the same construction apart from the guide wheels that are replaced by a sliding part 9, such as a slide shoe, protruding into a longitudinal slot of a co-acting vertical rail, that can guide the mechanism along the vertical rail. Such a slide mechanism would have its sliding part 9, protruding into the vertical rail, being made of a low friction material, such as e.g. nylon or PTFE.

Even if the preferred embodiment has been described in relation to the co-acting oval tube 4 and the bolt and nut arrangement 6, it is also possible to arrange the articulated connection between the load carrier and the roller mechanism in other ways, allowing the roller mechanism to both pivot in relation to the load carrier and to be somewhat displaceable in the transverse direction of the loading compartment.

In the description the preferred embodiment has been described as being made of steel, but it is also possible to make the roller mechanism in other materials such as aluminium or other metals or alloys.

The load carrier arrangement according to the present application can favourably be combined with the load carrier arrangements defined in the inventor's previous European patent applications defined above.

The load carrier arrangement according to the invention can consequently be constructed so that it can be completely raised to the top of the vertical rails and easily locked there so that it would be possible to drive with load carrying fork trucks under such raised load carriers, when loading or unloading the loading compartment.

## Claims

1. A load carrier arrangement for raisable and lowerable load carriers in a loading compartment of trucks, where the carriers support loads and can be raised and lowered to enable goods to be supported at several levels in the loading compartment, wherein the load carriers are connected to slide or roller mechanisms (1) at the transverse ends of the load carriers (5) and the slide or roller mechanisms co-acting with vertical rails located at both longitudinal sides of the loading compartment so that the load carriers (5) can be raised and lowered to be located at several levels in the loading compartment, wherein the slide or roller mechanism (1) is connected to the load carrier (5) by means of an articulated connection (4, 6), **characterised in that** the articulated connection is made so that the slide or roller mechanism (1) is displaceable in the transverse direction of the loading compartment in relation to the load carrier.

2. A load carrier arrangement according to claim 1, **characterised in that** slide or roller mechanism (1) is pivotable in relation to the load carrier (5).

3. A load carrier arrangement according to claim 1 or 2, **characterised in that** the articulated connection is formed by a tube (4) inserted into the slide or roller mechanism or into the load carrier, and a bolt and nut arrangement (6) having a bolt passing through both the slide or roller mechanism (1) and the load carrier (5) and through the tube (4).

4. A load carrier arrangement according to claim 3, **characterised in that** the tube (4) has an oval form so that it is longer in a direction crosswise to a longitudinal direction of the slide or roller mechanism (1).

5. A load carrier arrangement according to claim 3 or 4, **characterised in that** the tube (4) is inserted and welded to two opposing side walls (3) of the slide or roller mechanism (1).

6. A load carrier arrangement according to any one of the preceding claims, **characterised in that** the slide or roller mechanism (1) is a roller mechanism and is provided with at least two guide wheels (8) arranged in a vertical row.

7. A load carrier arrangement according to claim 6, **characterised in that** the roller mechanism (1) is provided with three guide wheels (8) arranged in a vertical row.

8. A load carrier arrangement according to any one of claims 1-5, **characterised in that** the slide or roller mechanism is a slide mechanism (1), comprising a slide part (9) of a low friction material, the slide part (9) protruding into a longitudinal slot of a co-acting vertical rail.

## Patentansprüche

1. Lastträgeranordnung für anhebbare und absenkbare Lastträger in einem Beladeabteil von Lastkraftwagen, wobei die Träger Lasten tragen können und angehoben und abgesenkt werden können, um zu ermöglichen, dass Waren auf verschiedenen Niveaus im Beladeabteil getragen werden können, wobei die Lastträger mit Gleit- oder Rollenmechanismen (1) an den Querenden der Lastträger (5) verbunden sind und die Gleit- oder Rollenmechanismen mit vertikalen Schienen zusammenarbeiten, die sich an beiden Längsseiten des Beladeabteils befinden, so dass die Lastträger (5) angehoben und abgesenkt werden können, um sich auf verschiedenen Ebenen im Beladeabteil zu befinden, wobei der Gleit- oder Rollenmechanismus (1) mit dem Lastträger (5) mittels einer gelenkigen Verbindung (4, 6) verbunden ist, **dadurch gekennzeichnet, dass** die gelenkige Verbindung so beschaffen ist, dass der Gleit- oder Rollenmechanismus (1) in Querrichtung des Beladeabteils in Bezug zum Lastträger verschieblich ist.

2. Lastträgeranordnung nach Anspruch 1, **dadurch gekennzeichnet, dass** der Gleit- oder Rollenmechanismus (1) schwenkbar bezüglich des Lastträgers (5) ist.

3. Lastträgeranordnung nach Anspruch 1 oder 2, **dadurch gekennzeichnet, dass** die gelenkige Verbindung durch ein Rohr (4), das in den Gleit- oder Rollenmechanismus oder in den Lastträger eingeführt ist, und eine Bolzen- und Mutternanordnung (6) gebildet wird, die einen Bolzen aufweist, der sowohl durch den Gleit- oder Rollenmechanismus (1) und den Lastträger (5) und durch das Rohr (4) hindurch verläuft.

4. Lastträgeranordnung nach Anspruch 3, **dadurch gekennzeichnet, dass** das Rohr (4) ovale Form aufweist, so dass es in Richtung quer zu einer Längsrichtung des Gleit- oder Rollenmechanismus (1) länger ist.

5. Lastträgeranordnung nach Anspruch 3 oder 4, **dadurch gekennzeichnet, dass** das Rohr (4) eingeführt und mit zwei gegenüberliegenden Seitenwänden (3) des Gleit- oder Rollenmechanismus (1) verschweißt ist.

6. Lastträgeranordnung nach einem der vorhergehenden Ansprüche, **dadurch gekennzeichnet, dass** der Gleit- oder Rollenmechanismus (1) ein Rollenmechanismus ist und mit mindestens zwei Führungsrädern (8) versehen ist, die in vertikaler Reihe angeordnet sind.

7. Lastträgeranordnung nach Anspruch 6, **dadurch gekennzeichnet, dass** der Rollenmechanismus (1) mit drei Führungsrädern (8) versehen ist, die in vertikaler Reihe angeordnet sind.

8. Lastträgeranordnung nach einem der Ansprüche 1 bis 5, **dadurch gekennzeichnet, dass** der Gleit- oder Rollenmechanismus ein Gleitmechanismus (1) ist, der einen Gleitteil (9) aus einem geringe Reibung aufweisenden Material ist, wobei der Gleitteil (9) in einen Längsschlitz einer zusammenarbeitenden vertikalen Schiene vorragt.

## Revendications

1. Dispositif de support de charge pour des supports de charge susceptibles d'être relevés et abaissés dans un compartiment de chargement d'un camion, dans lesquels les porteurs tiennent les supports de charge qui peuvent être relevés et abaissés pour permettre le chargement de marchandises à différents niveaux du compartiment de chargement,
- les supports de charge étant reliés à des mécanismes coulissants ou roulants (1) aux extrémités transversales des supports de charge (5) et les mécanismes coulissants ou roulants coopérant avec des rails verticaux situés sur les deux côtés longitudinaux du compartiment de chargement, de façon à pouvoir abaisser ou relever les supports de charge (5) pour les placer à différents niveaux dans le compartiment de chargement,
- le mécanisme de coulissement ou de roulement (1) étant relié au support de charge (5) par une liaison articulée (4, 6),
dispositif **caractérisé en ce que**
la liaison articulée est telle que le mécanisme coulissant ou roulant (1) est mobile dans la direction transversale du compartiment de chargement en liaison avec le support de charge.

2. Dispositif de support de charge selon la revendication 1,
**caractérisé en ce que**
le mécanisme coulissant ou roulant (1) pivote en liaison avec le support de charge (5).

3. Dispositif de support de charge selon la revendication 1 ou 2,
**caractérisé en ce que**
la liaison articulée est réalisée avec un tube (4) inséré dans le mécanisme coulissant ou roulant ou dans le support de charge et un boulon (6) formé d'une vis et d'un écrou avec un écrou passant à travers le mécanisme coulissant ou roulant (1) et dans le support de charge (5) et par le tube (4).

4. Dispositif de support de charge selon la revendication 3,
**caractérisé en ce que**
le tube (4) a une forme ovale de sorte qu'il est plus long dans la direction transversale que dans la direction longitudinale du mécanisme coulissant ou roulant (1).

5. Dispositif de support de charge selon la revendication 3 ou 4,
**caractérisé en ce que**
le tube (4) est inséré et soudé dans les deux parois latérales opposées (3) du mécanisme coulissant ou roulant (1).

6. Dispositif de support de charge selon l'une quelconque des revendications précédentes,
**caractérisé en ce que**
le mécanisme coulissant ou roulant (1) est un mécanisme à roues et il comporte au moins deux roues de guidage (8) disposées dans une rangée verticale.

7. Dispositif de support de charge selon la revendication 6,
**caractérisé en ce que**
le mécanisme roulant (1) comporte trois roues de guidage (8) disposées dans une rangée verticale.

8. Dispositif de support de charge selon l'une quelconque des revendications 1 à 5,
**caractérisé en ce que**
le mécanisme coulissant ou roulant est un mécanisme coulissant (1) ayant une pièce coulissante (9) en un matériau à faible friction, la pièce coulissante (9) venant en saillie dans une fente longitudinale du rail vertical avec lequel il coopère.
